# EUROPÄISCHE PATENTSCHRIFT

(11) **EP 0 407 884 B1**
(45) Veröffentlichungstag und Bekanntmachung des Hinweises auf die Patenterteilung: **23.03.1994**
(21) Anmeldenummer: 90112806.6
(22) Anmeldetag: 05.07.1990
(51) Int. Cl.: B01D 25/12, B01D 37/03

(54) **Anlage zum Konditionieren und Entwässern von Schlämmen in einer Kammerfilterpresse**
Device for conditioning and dewatering sludges in a filter press
Dispositif de conditionnement et de déshydratation de boues dans une presse filtrante

(30) Priorität: 14.07.1989 DE 3923298
(43) Veröffentlichungstag der Anmeldung: 16.01.1991
(73) Patentinhaber: R + T SCHLAMMENTWÄSSERUNGS GmbH, 64546 Mörfelden-Walldorf (DE)
(72) Erfinder: Banzhaf, Friedrich, W-7517 Waldbronn 1 (DE)
(74) Vertreter: Geitz, Heinrich, Dr.-Ing.

(56) Entgegenhaltungen:
- DE-A- 2 656 886
- DE-C- 256 603
- FR-A- 2 096 275
- GB-A- 2 175 352
- US-A- 1 862 873

## Beschreibung

Das Konditionieren von Schlämmen und deren anschließendes Entwässern durch Verpressen in Kammerfilterpressen sind bekannt. Dabei versteht man unter Konditionierung eine Vermengung von Schlämmen mit einem Polymer, bei dem es sich in aller Regel um ein Flockungsmittel handelt. Insoweit kommt es entscheidend auf eine schonende Gutbehandlung schon beim Ansetzen des Polymers mit Klärschlamm und insbesondere beim Fördern und Verpressen der konditionierten Schlämme an. Diesen Erfordernissen genügen bekannte Anlagen nur unzulänglich.

Bei einer bekannten Anlage werden die in einem Mischbehälter konditionierten Schlämme mittels einer Exzenterschneckenpumpe zu einer Kammerfilterpresse gefördert und in dieser verpreßt, indem nach und nach eine dem in der Presse austretenden Flüssigkeitsvolumen entsprechende Nachförderung stattfindet. Es sind für diesen Zweck auch schon Axialpumpen mit umlaufenden Flügelrädern oder Propellern eingesetzt und derartige Pumpen mit Leitwerken versehen worden. Diese vorbekannten Anlagen vermitteln zwar eine kontinuierliche Gutförderung, gewährleisten aber keine hinreichend gutschonende Behandlung der konditionierten Schlämme mit der Folge, daß der durch die Konditionierung angestrebte Effekt, Feststoffe an sich zu binden, beeinträchtigt werden kann.

Durch die Erfindung soll dieser Unzulänglichkeit abgeholfen und eine verbesserte Anlage der vorstehend angegebenen Art und Zweckbestimmung geschaffen werden, die ein gutschonendes Fördern und Verpressen von konditionierten Schlämmen ermöglicht.

Gelöst ist diese Aufgabe durch die Schaffung einer Anlage, die einen Konditionierteil mit einem Mischbehälter zum innigen Vermischen von Schlamm mit einem Konditionierungsmittel sowie zum Fördern der konditionierten Schlämme vom Mischbehälter zur Kammerfilterpresse einen über Leitungen mit dem Mischbehälter und der Kammerfilterpresse verbundenen Pumpenteil mit wenigstens zwei im wesentlichen gegenläufig angetriebenen Kolbenpumpen besitzt, die auf eine gemeinsame Förderleitung geschaltet und so gesteuert sind, daß jeweils der Druckhub der einen Pumpe beginnt, bevor die andere Pumpe ihren Druckhub beendet hat und deren Kolben in seiner äußeren Endlage zur nachfolgenden Ausführung eines Saughubs umgesteuert wird.

Im Gegensatz zu den mit Rotationskolben oder sonstige umlaufende Rotoren aufweisenden Pumpen ausgerüsteten vorbekannten Anlagen nach dem Stande der Technik sind somit bei der Erfindung oszillatorisch betätigte Kolbenpumpen eingesetzt, die eine äußerst gutschonende Behandlung der konditionierten Schlämme beim Fördern und Verpressen gewährleisten. Besondere Bedeutung kommt dabei der erfindungsgemäßen Steuerung der Pumpenantriebe insofern zu, als angesichts der Einleitung des Druckhubs der einen Pumpe, bevor die jeweils andere Pumpe in ihre äußere Endlage gelangt und dann unter Richtungsumkehrung ihres Kolbens einen Saughub ausführt, sich nach dem Befüllen der Kammern der Kammerfilterpresse pumpenabströmseitig ein praktisch konstanter Druck einstellt. Diese Druckkonstanz gewährleistet ein stetiges Verpressen und dadurch bedingt eine fortlaufende Entwässerung des in den Kammern der Kammerfilterpresse aufgenommenen Schlamms, indem ein dem ausgepreßten Wasser entsprechendes Schlammvolumen laufend nachgefördert wird. Es hat sich gezeigt, daß auf diese Weise unproblematisch eine Schlammentwässerung auf 35 % und mehr Trockenmasse erreicht werden kann.

Wenn anstelle von zwei alternierend zueinander arbeitenden Pumpen bei der Erfindung eine größere Pumpenanzahl vorgesehen ist, sind diese in sinngemäßer Weise so zu steuern, daß die aufeinanderfolgenden Arbeitszyklen der einzelnen Pumpen sich jeweils überlappen, indem vor Beendigung des Druckhubs einer Pumpe bereits der Druckhub der nächstfolgenden Pumpe begonnen hat.

Aus der DE-A-2 656 886 ist zwar schon eine aus einer Filterpresse und einer Pumpvorrichtung bestehende Anlage zum Entwässern und Verdichten von Schlämmen vorbekannt, bei der die Pumpvorrichtung eine mittels einer Förderleitung mit Rückschlagventil mit der Filterpresse verbundene Kolbenmembranpumpe aufweist und darüber hinaus mit einer über eine spezielle Leitung mit Rückschlagventil parallel an die genannte Förderleitung angeschlossene Exzenterschneckenpumpe besitzt. Ferner ist die vorbekannte Anlage mit einer Steuereinrichtung ausgerüstet und mittels letzterer so gesteuert, daß zunächst die Schlammförderung zur Filterpresse mittels der Exzenterschneckenpumpe erfolgt und beim Erreichen eines vorgegebenen Förderdruckes von der Exzenterschneckenpumpe auf die Kolbenmembranpumpe umgeschaltet wird. Durch diese Maßnahme soll erreicht werden, daß über einen weiten Weg der Entwässerungs- und Verdichtungsarbeit die Filterpressenbeschickung kontinuierlich mit selbsttätiger Anpassung der Förderleistung an den zunehmenden Druck in der Förderleitung erfolgt und erst am Ende der Entwässerungs- und Verdichtungsarbeit mittels der dann eingesetzten Kolbenmembranpumpe bei abgeschalteter Exzenterschneckenpumpe die dann kleinen Fördervolumen bei hohem Druck zur Filterpresse gefördert werden.

Demgegenüber erfolgt bei der erfindungsgemäßen Anlage eine kontinuierliche Beschickung der Kammerfilterpresse mittels wenigstens zwei im wesentlichen gegenläufig angetriebenen Kolbenpumpen, die auf eine gemeinsame Förderleitung in der Weise arbeiten, daß jeweils der Druckhub der einen Pumpe einsetzt, bevor der Druckhub der anderen Pumpe beendet ist.

Zweckmäßige Ausgestaltungen der Erfindung sind in den nachgeordneten Patentansprüchen angegeben.

So sieht die Ausgestaltung gemäß Patentanspruch 2 vor, daß die Antriebe der Pumpen doppeltwirkende und mithin umsteuerbare Arbeitszylinder besitzen, deren wahlweise vorder- und rückseitig beaufschlagbare Arbeitskolben mit den Kolben der Pumpen axialfest verbunden sind. Diese Verbindungen können beispielsweise mittels spezieller Kupplungsstücke verwirklicht sein.

Selbstverständlich können die Pumpen der erfindungsgemäßen Anlage auch auf beliebige andere Weise angetrieben werden, aber bei Verwendung umsteuerbarer Arbeitszylinder mit wahlweise vorder- und rückseitig beaufschlagbaren Arbeitskolben ergeben sich einerseits eine äußerst einfache Bauweise und andererseits ist eine Betriebsweise mit einer präzisen Einstellung des Druckniveaus durch Wahl der Vorspannung des zum Beaufschlagen der Arbeitszylinder dienenden Arbeitsmediums möglich. Bei den als Antriebsmitteln eingesetzten Arbeitszylindern kann es sich gleichermaßen um Hydraulik- oder Druckluftzylinder handeln.

Obgleich im Rahmen der Erfindung vielfältige Möglichkeiten zum Steuern der Pumpenantriebe denkbar sind, hat es sich auch als vorteilhaft erwiesen, zum Steuern des Antriebs jeder Pumpe einen beim Druckhub vor dem Erreichen der äußeren Totlage überfahrbaren Schaltkontakt zum Einleiten des Druckhubs der jeweils anderen Pumpe vorzusehen, hingegen zum Umsteuern in der äußeren Totlage auf Saughub einen Endschalter einzusetzen. Als mit diesem Schaltkontakten und Endschaltern zusammenwirkende Mittel kann der Arbeitskolben jedes Arbeitszylinders mit einem Schaltkragen axialfest verbunden sein, der den Schaltkontakt zum Einleiten des Druckhubs der jeweils anderen Pumpe überfährt, bevor er in der Totlage auf den die Umsteuerung bewirkenden Endschalter auftrifft.

Naturgemäß müssen Kolbenpumpen mit Rückströmungen verhindernden Steuerorganen ausgerüstet sein. Als besonders vorteilhaft hat sich insoweit erwiesen, wenn jeder Pumpe ansaug- und druckseitig jeweils eine Rückschlagklappe zugeordnet ist und die ansaugseitigen Rückschlagklappen in den sich zwischen dem Mischbehälter und den Pumpen erstreckenden Ansaugleitungen und die druckseitigen Rückschlagklappen in den sich von den Pumpen zu einer Kammerfilterpresse forterstreckenden Druckleitungen angeordnet sind.

Nachstehend soll eine Ausführungsform der Erfindung erläutert werden, die in den beigefügten Zeichnungen dargestellt ist. In schematischen Ansichten zeigen:
- Fig. 1: eine Anlage zum Konditionieren und Entwässern von Schlämmen in einer Kammerfilterpresse in einer seitlichen Ansicht bei Weglassung der Kammerfilterpresse,
- Fig. 2: eine Draufsicht auf die Anlage gemäß Fig. 1 mit zwei parallelgeschalteten und auf eine gemeinsame Förderleitung arbeitenden Kolbenpumpen, ebenfalls bei Weglassung der Kammerfilterpresse,
- Fig. 3: eine - verkleinerte - Ansicht wie in Fig. 2, jedoch mit den Pumpen in einer anderen Betriebsstellung und
- Fig. 4: eine weitere Betriebsstellung der Pumpen in einer Ansicht wie in Fig. 3.

Der Konditionierteil 10 der Anlage umfaßt einen mit Schlamm befüllbaren Mischbehälter 11, der hinsichtlich seines speziellen Aufbaues hier nicht interessiert, ferner einen Behälter 12 für die Aufnahme von Flockungsmittel. Der Flockungsmittelbehälter 12 steht über eine mit einem absperrbaren Kugelhahn 13 versehene Leitung 14 mit dem Mischbehälter 11 in Verbindung. Der Mischbehälter besitzt eine nur angedeutete Mischvorrichtung 15 und hat einen geneigten Boden 16 mit einer Austragöffnung 17, an die sich eine mit einem absperrbaren Kugelhahn 18 versehene Leitung 19 anschließt. Auf der vom Mischbehälter 11 abgewandten Seite des Kugelhahns 18 befindet sich eine Verzweigung 20 mit zwei sich zunächst parallel erstreckenden und zu Pumpen 24, 24' eines nachfolgend noch zu beschreibenden Pumpenteils 25 hinführenden Rohrleitungen 22, 22'.

Bei den Pumpen des Pumpenteils 25 handelt es sich um zwei parallelgeschaltete Kolbenpumpen 24, 24' mit jeweils einem über eine Kolbenstange 26, 26' innerhalb eines zylindrischen Pumpengehäuses 27, 27' hin- und herbewegbaren Plunger. Angetrieben werden die Pumpen mittels doppeltwirkender Hydraulikzylinder 28, 28', deren Arbeitskolben 29, 29' über hier nicht weiter interessierende Kupplungsstücke 30, 30' jeweils mit einer der Kolbenstangen 26, 26' der Pumpen 24, 24' axialfest verbunden sind.

Die sich von der Verzweigung 20 forterstreckenden Rohrleitungen 22, 22' sind mit steuerbaren Rückschlagklappen 32, 32' versehen und münden in die zylindrischen Pumpengehäuse 27, 27' ein. Die Rückschlagklappen sind in hier im einzelnen nicht interessierender Weise druckausgleichend zwischen ihren Schließ- und Öffnungslagen betätigbar. Von jedem der Pumpengehäuse 27, 27' erstreckt sich auf der von den Kolbenstangen 26, 26' abgewandten Seiten eine Druckleitung 33, 33' fort. In jeder dieser Druckleitungen ist ebenfalls eine steuerbare und druckausgleichend zwischen ihrer Öffnungs - und Schließlage betätigbare Rückschlagklappe 34, 34' angeordnet. Auf den von den Pumpen abgewandten Seiten dieser Rückschlagklappen münden die Druckleitungen 33, 33' in eine gemeinsame Förderleitung 35, die ihrerseits in die nicht gezeigte Kammerfilterpresse einmündet.

Die wechselseitige Beaufschlagung der den Pumpenantrieb vermittelnden Hydraulikzylinder 28, 28' wird jeweils über einen auf den Kupplungsstücken 30, 30' aufgenommenen und mit je einem Schalkontakt 36, 36' und je einem Endschalter 37, 37' zusammenwirkenden Schaltkragen 38, 38' gesteuert. Die Schaltkontakte und Endschalter sind in Bewegungsrichtung der Kolbenstangen 26, 26' axial verschiebbar und letztere begrenzen die äußere Endlage der Plunger. Die saugseitigen Totpunktlagen werden hingegen durch eine Zeit-Weg-Steuerung bestimmt.

Bei bestimmungsgemäßem Einsatz der Anlage wird der Mischbehälter 11 des Konditionierteils 10 mit Schlamm gefüllt und dann der Schlamm mit aus dem Flockungsmittelbehälter 12 über den Kugelhahn 13 und die Leitung 14 zugeführten Flockungsmittel vermengt. Die innige, gleichwohl aber schonende Vermischung von Flockungsmittel und Schlamm vermittelt die Mischeinrichtung 15, die von Hand betätigt werden oder motorisch angetrieben sein kann.

Nach der infolge Durchmischung von Schlamm und Flockungsmittel bewirkten Konditionierung, die allgemein bekannt ist und daher keiner weiteren Erläuterung bedarf, wird der Kugelhahn 18 in der Leitung 19 geöffnet und alternierend der konditionierte Schlamm von den beiden gegenläufig betätigten Pumpen 24, 24' über die Austragöffnung 17 und die Leitungen 19 und 22, 22' angesaugt sowie über die Druckleitungen 33, 33' und die gemeinsame Förderleitung 35 der nicht gezeigten Kammerfilterpresse zugeführt. Die in den abströmseitigen Druckleitungen 33, 33' angeordneten Rückschlagklappen 34, 34' stehen bei den Saughüben der Pumpen 24, 24' in Schließlage und verhindern ein Rücksaugen von Schlamm aus der Kammerfilterpresse, während die Rückschlagklappen 32, 32' in den saugseitigen Leitungen 22, 22' in Offenstellung stehen. Bei den Druckhüben der Pumpen sind hingegen die saugseitigen Rückschlagklappen 32, 32' geschlossen und die druckseitigen Rückschlagklappen 34, 34' stehen in Offenstellung, so daß keinerlei Rückströmung von den Arbeitskammern der Pumpen stattfinden kann und der beim jeweiligen Saughub angesaugte Schlamm über die Druckleitungen 33, 33' und die gemeinsame Förderleitung 35 zur Kammerfilterpresse gefördert wird.

Nachdem die einzelnen Kammern der nicht gezeigten Kammerfilterpresse mit Schlamm gefüllt sind, baut sich bei weiterlaufenden Pumpen 24, 24' in der Kammerfilterpresse und den druckseitigen Leitungen 33, 33' und 35 des Pumpenteils 25 ein vorbestimmter Druck auf, der infolge stetiger Nachförderung bis zum Erreichen des gewünschten Entwässerungsgrades aufrechterhalten bleibt. Dieser Druck wird dadurch konstant gehalten, daß jeweils vor dem Erreichen des äußeren Totpunktes des Kolbens der einen Pumpe 24, 24' der dieser zugeordnete Schaltkragen 38, 38' den vor der äußeren Totlage angeordneten Kontakt 36, 36' überfährt und damit den Druckhub der anderen Pumpe einleitet. Die äußeren Totlagen der Pumpenkolben sind hingegen durch die Endschalter 37, 37' definiert, die beim Auftreffen des jeweiligen Schaltkragens 38, 38' den Pumpenantrieb umsteuern und den Rückhub einleiten. Durch die variabel einstellbare vor- bzw. nacheilende oszillierende Bewegung der Pumpenkolben ist in den Druckleitungen 33, 33' und der gemeinsamen Förderleitung 35 ein völlig konstanter Druck gewährleistet, und zwar unabhängig von der Kolbengeschwindigkeit bzw. der Hubzahl der Kolbenpumpen je Zeiteinheit.

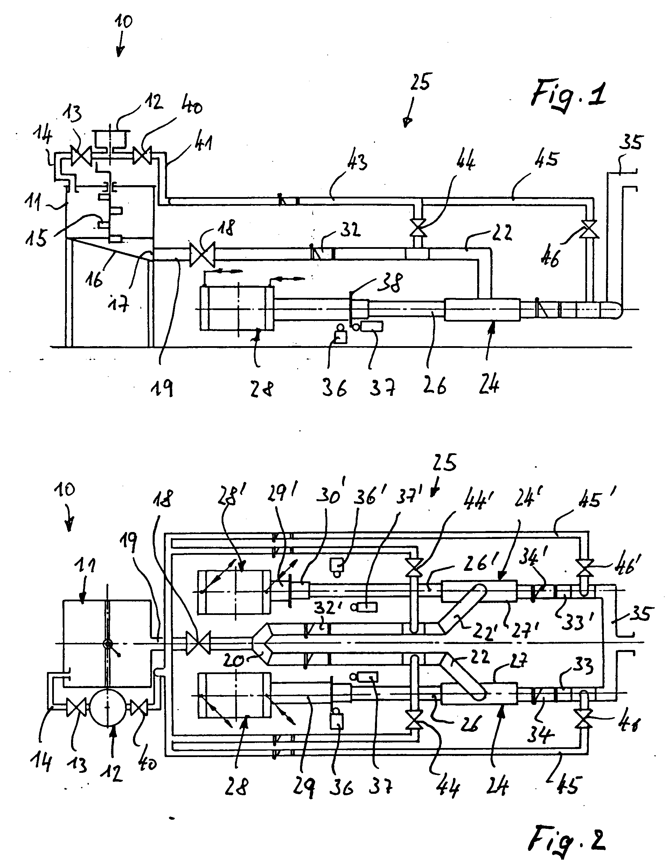

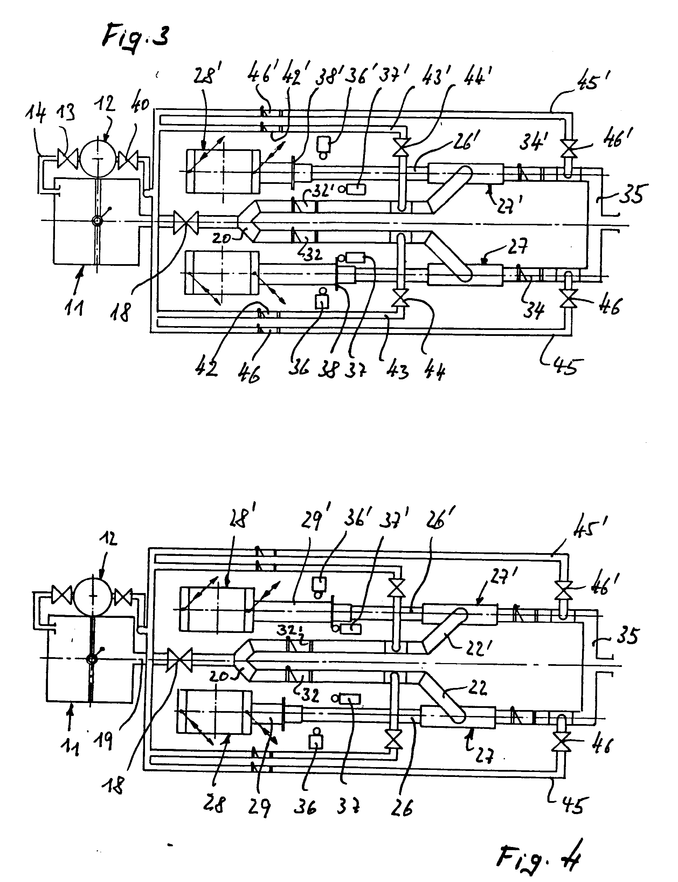

In der in Fig. 2 gezeigten Betriebsstellung wird der Schaltkontakt 36 der Pumpe 24 gerade vom Schaltkragen 38 überfahren und dadurch der Druckhub der noch in ihrer saugseitigen Endlage stehenden Pumpe 24' eingeleitet. In der in Fig. 3 veranschaulichten Betriebsstellung hat der Plunger der Pumpe 24 seine äußere Totlage erreicht und der dieser Pumpe zugeordnete Schaltkragen ist auf den Endschalter 37 aufgelaufen, wodurch die Beaufschlagung des den Antrieb vermittelnden Hydraulikzylinders 28 umgesteuert und der Saughub eingeleitet wird. Ferner zeigt Fig. 3, daß die Kolbenstange 26' der Pumpe 24' aus deren saugseitiger Endlage verfahren ist und mithin voreilend vor dem Erreichen der äußeren Totlage des Plungers der anderen Pumpe angetrieben wird. Fig. 4 schließlich zeigt analog zu Fig. 3 die Pumpe 24' in der äußeren Totlage, hingegen die Pumpe 24 in einer voreilenden Betriebsstellung am Anfang des Druckhubs.

Die in den Zeichnungen veranschaulichte Anlage ermöglicht ferner eine Nachkonditionierung. Insofern ist eine sich vom Flockungsmittelbehälter 12 forterstreckende und mit einem absperrbaren Kugelhahn 40 ausgerüstete Leitung 41 auf zwei mit jeweils einer Rückschlagklappe 42, 42' ausgerüstete Leitungen 43, 43' schaltbar, die ihrerseits über Kugelhähne 44, 44' mit den Ansaugseiten der Pumpen 24, 24' verbindbar sind. Zwei weitere Leitungen 45, 45', die über den erwähnten Kugelhahn 40 mit dem Flockungsmittelbehälter 12 verbindbar und ebenfalls je mit einer Rückschlagklappe 46, 46' versehen sind, münden über absperrbare Kugelhähne 46, 46' abströmseitig von den Rückschlagklappen 34, 34' in die sich von den Pumpen forterstreckenden Druckleitungen 33, 33' ein.

Im Falle einer erwünschten Nachkonditionierung wird der Kugelhahn 13 in der sich vom Flockungsmittelbehälter 12 in den Mischbehälter 11 erstreckenden Leitung 14 geschlossen und über die erwähnten Leitungen 41, 43, 43' bzw. 41, 45, 45' und Kugelhähne 40, 44, 44' bzw. 40, 46, 46' dem vorkonditionierten Schlamm auf der Ansaugseite der Pumpen 24, 24' oder aber abströmseitig in den Druckleitungen 33, 33' Flockungsmittel zugeführt, was indessen hier nicht weiter interessiert.

## Patentansprüche

1. Anlage zum Konditionieren und Entwässern von Schlämmen in einer Kammerfilterpresse, die einen Konditionierteil (10) mit einem Mischbehälter (11) zum innigen Vermischen von Schlamm mit einem Konditionierungsmittel sowie zum Fördern der konditionierten Schlämme vom Mischbehälter zur Kammerfilterpresse einen über Leitungen mit dem Mischbehälter (11) und der Kammerfilterpresse verbundenen Pumpenteil (25) mit wenigstens zwei im wesentlichen gegenläufig angetriebenen Kolbenpumpen (24, 24') besitzt, die auf eine gemeinsame Förderleitung (35) geschaltet und so gesteuert sind, daß jeweils der Druckhub der einen Pumpe beginnt, bevor die andere Pumpe ihren Druckhub beendet hat und deren Kolben in seiner äußeren Endlage zur nachfolgenden Ausführung eines Saughubs umgesteuert wird.

2. Anlage nach Anspruch 1, dadurch gekennzeichnet, daß die Antriebe der Pumpen (24, 24') doppeltwirkende und mithin umsteuerbare Arbeitszylinder (28, 28') besitzen, deren wahlweise vorder- und rückseitig beaufschlagbare Arbeitskolben (29, 29') mit den Kolben der Pumpen axialfest verbunden sind.

3. Anlage nach Anspruch 2, dadurch gekennzeichnet, daß jeweils der Arbeitskolben (29, 29') eines Arbeitszylinders (28, 28') mit dem Kolben einer Pumpe (24, 24') über ein Kupplungsstück (30, 30') axialfest verbunden ist.

4. Anlage nach einem der Ansprüche 1 bis 3, dadurch gekennzeichnet, daß zum Steuern der Pumpenantriebe jeder Pumpe (24, 24') ein beim Druckhub vor dem Erreichen der äußeren Totlage überfahrbarer Kontakt (36, 36'), der zum Einleiten des Druckhubs der jeweils anderen Pumpe dient, und zum Um steuern in der äußeren Totlage auf Saughub ein Endschalter (37, 37') zugeordnet sind.

5. Anlage nach Anspruch 4, dadurch gekennzeichnet, daß der Arbeitskolben (29, 29') jedes Arbeitszylinders (28, 28') mit einem Schaltkragen (38, 38') axialfest verbunden ist, der mit dem zugeordneten Schaltkontakt (36, 36') und Endschalter (37, 37') der vom betreffenden Arbeitszylinder angetriebenen Pumpe (24, 24') zusammenwirkt.

6. Anlage nach einem der Ansprüche 1 bis 5, dadurch gekennzeichnet, daß jeder Pumpe (24, 24') ansaug- und druckseitig jeweils eine Rückströmungen verhindernde Rückschlagklappe (32, 32'; 34, 34') zugeordnet sind.

7. Anlage nach Anspruch 6, dadurch gekennzeichnet, daß die saugseitigen Rückschlagklappen (32, 32') in die sich zwischen dem Mischbehälter (11) und den Pumpen (24, 24') erstreckenden Ansaugleitungen (22, 22') und die druckseitigen Rückschlagklappen (34, 34') in den sich von den Pumpen fortertreckenden Druckleitungen (33, 33') angeordnet sind.

## Claims

1. Plant for the conditioning and drainage of sludges in a chamber filter press, which comprises a conditioning part (10) with a mixing container (11) for the intimate admixing of sludge with a conditioning agent as well as a pump part (25), which is for the conveying of the conditioned sludges from the mixing container to the chamber filter press and is connected with the mixing container (11) and the chamber filter press by way of ducts, with at least two piston pumps (24, 24') which are driven substantially in opposite sense and which are connected to a common conveying duct (35) and so controlled that the pressure stroke of one pump starts each time before the other pump has completed its pressure stroke and the piston thereof has reversed in its outer end position for following execution of a suction stroke.

2. Plant according to claim 1, characterised thereby that the drive of the pumps (24, 24') comprises double-acting and therefore reversible jack cylinders (28, 28'), the working pistons (29, 29'), which are selectably loadable at the front end and the rear end, of which are connected with the pistons of the pumps to be first in axial direction.

3. Plant according to claim 2, characterised thereby that the working piston (29, 29') of a jack cylinder (28, 28') is connected with the piston of a pump (24, 24') by way of a coupling member (30, 30') to be fast in axial direction.

4. Plant according to one of claims 1 to 3, characterised thereby that associated with each pump (24, 24'), for the control of the pump drive, are a contact (36, 36'), which during the pressure stroke can be travelled over before attainment of the outer dead setting and which serves for initiation of the pressure stroke of the respective other pump, and a limit switch (37, 37') for the reversal in the outer dead setting to the suction stroke.

5. Plant according to claim 4, characterised thereby that the working piston (29, 29') of each jack cylinder (28, 28') is connected axially fast with a switching collar (38, 38'), which cooperates with the associated switching contact (36, 36') and limit switch (37, 37') of the pump (24, 24') driven by the jack cylinder concerned.

6. Plant according to one of claims 1 to 5, characterised thereby that a respective non-return flap valve (32, 32'; 34, 34'), which prevents return flows, is associated with each pump (24, 24') at the suction side and the pressure side.

7. Plant according to claim 6, characterised thereby that the non-return flap valves (32, 32') at the suction side are arranged in the suction ducts (22, 22') extending between the mixing container (11) and the pumps (24, 24') and the non-return flap valves (34, 34') at the pressure side are arranged in the pressure ducts (33, 33') continuing on from the pumps.

## Revendications

1. Installation de conditionnement et d'essorage de boues dans une presse à chambre de filtration comprenant une partie de conditionnement (10) avec une chambre de mélange (11) pour le mélange intime de la boue avec un médium de conditionnement et un conduit d'acheminement de la boue conditionnée de la chambre de mélange à la presse à chambre de filtration par un conduit, la chambre de mélange (11) et la presse à chambre de filtration étant reliées à un étage de pompage (25) incluant au moins deux pompes à piston (24, 24') à courses opposées connectées à un collecteur commun (35) actionnées de sorte que lorsque la course de pression d'un piston commence, la course de pression de l'autre piston soit terminée et que cet autre piston à partir de son palier extérieur effectue une course d'aspiration inversée.

2. Installation selon la revendication 1, caractérisée en ce que l'entraînement des pompes (24, 24') est à double effet avec deux cylindres de travail (28, 28') dont les pistons de travail (29, 29') sont solidaires des pistons des pompes dans leurs mouvements d'aller et de retour.

3. Installation selon la revendication 2, caractérisée en ce que chaque piston de travail (29, 29') d'un cylindre de travail (28, 28') est solidarisé axialement avec le piston d'une pompe (24, 24') par une pièce de couplage (30, 30').

4. Installation selon l'une des revendications 1 à 3, caractérisée en ce qu'un contact (36, 36') est disposé dans la région du point mort extérieur atteint par la course de pression de chaque pompe (24, 24') ce contact servant à commander la course de pression de l'autre pompe, et un contact de fin de course (37, 37') pour inverser à partir du point mort la course d'aspiration.

5. Installation selon la revendication 4, caractérisée en ce que les pistons (29, 29') de chacun des cylindres de travail (29, 29') sont reliés axialement avec un collet de distribution (38, 38') qui au moyen des contacts de commutation (36, 36') et de fin de course (37, 37') entraînent en coopération les cylindres correspondants des pompes (24, 24').

6. Installation selon l'une des revendications 1 à 5, caractérisée en ce qu'est disposé, sur chaque pompe du côté d'aspiration et du côté pression respectivement un clapet anti-retour (32, 32'; 34, 34').

7. Installation selon la revendication 6, caractérisé en ce que les clapets anti-retour (32, 32') sont disposés entre la chambre de mélange (11) et les pompes (24, 24') sur les conduits d'aspiration (22, 22') et les clapets anti-retour (34, 34') du côté pression sont disposés dans les conduits de pression (33, 33').
